# FASCICULE DE BREVET EUROPEEN

(11) **EP 3 122 192 B1**
(45) Date de publication et mention de la délivrance du brevet: **05.06.2019**
(21) Numéro de dépôt: 15717569.6
(22) Date de dépôt: 27.03.2015
(51) Int. Cl.: A23J 3/34, A23J 3/14, A23J 3/16, A23C 20/00

(54) **ALIMENT COMPRENANT DES PROTEINES ESSENTIELLEMENT D'ORIGINE VEGETALE ET SON PROCEDE DE PREPARATION**
LEBENSMITTEL ENTHALTEND PROTEINE AUS IM WESENTLICHEN PFLANZISCHER HERKUNFT, UND DESSEN HERSTELLUNGSVERFAHREN
FOOD COMPRISING PROTEINS SUBSTANTIALLY OF VEGETABLE ORIGIN AND PREPARATION PROCESS

(30) Priorité: 28.03.2014 FR 1400765
(43) Date de publication de la demande: 01.02.2017
(73) Titulaire: Onyx Developpement SAS, 76770 Malaunay (FR)
(72) Inventeur: LORAND, Jean Paul, F-76770 Malaunay (FR); KANDIL, Lamisse, F-76770 Malaunay (FR); D'HUART, Jean Baptiste, F-76770 Malaunay (FR)
(74) Mandataire: Cabinet Plasseraud
(86) Numéro de dépôt international: PCT/FR2015/050795
(87) Numéro de publication internationale: WO 2015/145089

(56) Documents cités:
- EP-A1- 1 911 355
- US-A- 5 055 310
- US-A1- 2002 009 528
- US-A1- 2004 241 284
- US-A1- 2010 311 950
- US-A1- 2012 231 119
- LIU J ET AL: "Effect of alcalase hydrolysis followed by transglutaminase treatment on the foaming properties of soybean protein isolate (SPI)", JOURNAL OF BIOTECHNOLOGY, ELSEVIER SCIENCE PUBLISHERS, AMSTERDAM, NL, vol. 136, 1 octobre 2008 (2008-10-01), page S730, XP026831597, ISSN: 0168-1656 [extrait le 2008-10-01]

## Description

La présente invention concerne un aliment comprenant des protéines essentiellement d'origine végétale ainsi qu'un procédé de fabrication dudit aliment.

Les protéines sont, avec les glucides et les lipides, l'une des trois grandes familles de macronutriments qui contribuent à l'apport énergétique.

Essentielles à l'organisme, elles y jouent un rôle structural (au niveau musculaire ou encore cutané) mais sont également impliquées dans de très nombreux processus tels que la réponse immunitaire (anticorps), le transport de l'oxygène dans l'organisme (hémoglobine), ou encore la digestion (enzymes digestives).

Il existe deux grandes classes de protéines, les protéines animales et les protéines végétales.

Les protéines animales proviennent notamment du lait, de l'oeuf, des poissons et de la viande.

Quant aux protéines végétales, elles proviennent essentiellement des céréales et des légumineuses.

Il a été établi que plus de 70 % des protéines consommées dans les sociétés occidentales sont d'origine animale, contre seulement 15-20% dans les pays en voie de développement.

Cette différence entre pays industrialisés et pays en voie de développement s'explique notamment par le fait que la production de protéines animales est plus coûteuse que la production de protéines végétales.

Par ailleurs, les matières premières animales telles que le lait, le poisson ou la viande sont beaucoup plus difficiles à conserver que les matières premières végétales.

De plus, les impacts environnementaux négatifs de la production de viande, tant intensive ou qu'extensive, sont de plus en plus mis en avant. Ils se traduisent principalement par un risque de dégradation de la qualité de l'eau, une substitution des forêts par des prairies, une réduction de la biodiversité ou bien encore une production de gaz à effet de serre.

Enfin, la disponibilité des produits animaux va décroitre dans les 50 prochaines années.

Il serait ainsi souhaitable de trouver une alternative aux produits alimentaires à base de protéines animales tels que par exemple les fromages ou les desserts lactés.

Cependant, la principale difficulté à cette alternative réside dans la présence de facteurs antinutritionnels tels que l'acide phytique, facteur de flatulence et facteur antitrypsique présents dans les protéines végétales. De plus, les protéines végétales, contrairement aux protéines animales, une fois mélangées avec d'autres ingrédients, se mettent difficilement en forme du fait que les protéines végétales présentent une fonctionnalité inférieure à celle des protéines animales qui sont par nature structurées.

Il existe des formes de structuration de produits à base de protéines végétales mais qui sont peu développées et dont l'offre de marché est limitée dans les pays en voie de développement.

Le document US 2012/231119 décrit des aliments à base de soja, notamment du lait de soja qui comprend des fibres, lesdits aliments présentant une bonne texture et saveur, et apportant la majorité des éléments nutritionnels présents dans le soja.

La transglutaminase, souvent appelée « colle à viande » est une enzyme largement utilisée dans l'industrie alimentaire. Cette enzyme est composée de chaines d'acides aminés et agit sur les protéines contenues dans les produits alimentaires afin de les coller entre elles.

Le document US 2004/0241284 décrit un procédé de production de protéines d'origine végétale réticulées par la transglutaminase. Il décrit également un gel de protéines.

La transglutaminase permet également d'améliorer la texture des produits riches en protéines. Il a été démontré que la transglutaminase permettait par exemple d'améliorer la texture du tofu (Liu, Chang & Tatsumi. 2004. Effect of thermal pretreatment of raw soymilk on the gel strength and microstructure of tofu induced by microbial transglutaminase. China: Department of food science and technology, 7p).

Dans ce document, du jus de soja est extrait et est ensuite transformé en tofu. Lors de la transformation en tofu, le sérum qui est riche en nutriments est éliminé par égouttage. Le tofu ainsi obtenu est très pauvre en nutriments.

Ainsi, il serait intéressant de disposer d'un aliment à faible coût et complet d'un point de vue nutritionnel, hautement concentré en protéines essentiellement d'origine végétale et qui présenterait une texture adaptée au type d'aliment désiré et qui pourrait constituer des substituts des produits alimentaires à base de protéines animales.

Or, les présents inventeurs ont découvert qu'un aliment riche en nutriments comprenant des protéines essentiellement d'origine végétale ayant été traitées avec de la transglutaminase permettait de répondre à ces besoins.

La présente invention a plus particulièrement pour objet un procédé de fabrication d'un aliment comprenant des protéines essentiellement d'origine végétale tel que défini à l'une quelconque des revendications 1 à 8.

La présente invention a également pour objet un aliment tel que défini à la revendication 9 ou la revendication 10.

### Aliment

La présente invention décrit un aliment comprenant des protéines essentiellement d'origine végétale susceptible d'être obtenu par un procédé comprenant les étapes consistant à :
(i) sélectionner une source naturelle de protéines végétales comprenant des nutriments ;
(ii) extraire un jus végétal à partir de la source naturelle de protéines végétales, ledit jus végétal comprenant la quasi-totalité ou la totalité des nutriments contenus dans la source naturelle de protéines végétales; et
(iii) concentrer ledit jus végétal;
(iv) chauffer le mélange obtenu à l'étape (iii) à une température T1 comprise entre 20 et 70°C pendant une durée t1 comprise entre 5 et 60 minutes;
(v) ajouter de la transglutaminase audit jus concentré végétal;
(vi) éventuellement ajouter au mélange de l'étape (v) un acidifiant afin que ledit mélange présente un pH compris entre 3,6 et 5,2; et
(vii) chauffer le mélange obtenu à l'étape (vi) à une température T2 comprise entre 80 et 140°C pendant une durée t2 comprise entre 2 et 60 minutes.

Selon l'invention, par « aliment » on entend un aliment fini, riche d'un point de vue nutritionnel, prêt à être consommé ou cuisiné.

L'aliment peut être choisi dans le groupe consistant en des aliments de type fromage, sauces, crèmes desserts, jus, pâtes à tartiner, galettes, pâtes à gâteaux, pâtes alimentaires, et des substituts de fromage avec ou sans affinage de type à pâte fondue, à pâte molle, à pâte ferme, à pâte dure.

Selon l'invention, par « essentiellement d'origine végétale », on entend que les protéines d'origine végétale contenue dans l'aliment représentent plus de 50%, voire plus de 70%, de préférence plus de 90%, et encore plus préférentiellement plus de 95% en poids du poids total des protéines contenues dans l'aliment.

Selon un mode de réalisation particulier, l'aliment comprend des protéines uniquement d'origine végétale.

Selon un mode de réalisation particulier, l'aliment ne contient aucun composant d'origine animale.

Selon l'invention, par « source naturelle de protéines végétales », on entend au moins une source naturelle de protéines choisie parmi les oléagineux, les oléano-protéagineux, les protéagineux, les céréales, les légumineuses, les graines et/ou feuilles de produits forestiers ligneux et non ligneux et leurs mélanges.

Selon l'invention, la source naturelle de protéines est choisie parmi les feuilles, les fruits et les écorces des arbres de la famille des Fabaceaes, des Bombacaceaes ou des Gnetaceae.

Selon un autre mode de réalisation particulier, la source naturelle de protéines est choisie parmi les plantes à graines oléagineuses et les légumineuses Fabacées. L'aliment selon l'invention comprend des protéines essentiellement d'origine végétale dont la source naturelle est choisie parmi l'arachide, le niebé, le haricot, le pois, le pois chiche, la lentille, le sésame, le quinoa, le fenugrec, le sorgho, le Mil, le millet, le riz, le fonio, le maïs, le néré, le moringa et leurs mélanges.

Selon un mode de réalisation particulier, la source naturelle de protéines végétales consiste notamment en une association d'arachide et de néré, ou d'arachide et de moringa.

De manière avantageuse, la source de protéines végétales naturelle n'a pas subi de traitement tel que par exemple l'épluchage, le dénoyautage ou l'épépinage.

Ainsi, à titre d'exemple, si la source naturelle de protéines végétales est une graine, alors elle comprend son enveloppe protectrice. Si la source naturelle de protéines végétales est une feuille, alors elle comprend la tige et les nervures.

Cependant, ladite source de protéines végétales naturelle peut avoir subi des traitements tels que l'épluchage, le dénoyautage ou l'épépinage.

Par « nutriment », on entend des lipides, des glucides, des sels minéraux et des vitamines.

Par la « quasi-totalité des nutriments contenus dans la source naturelle de protéines végétales», on entend plus de 75%, de préférence plus de 85% et de manière avantageuse plus de 95% des nutriments contenus dans la source naturelle de protéines végétales.

Ainsi, selon l'invention, le jus végétal obtenu après extraction et après avoir été traité avec la transglutaminase comprend non seulement les protéines mais également de nombreux nutriments tels que des lipides, des glucides, des sels minéraux, des vitamines et leurs mélanges.

Selon l'invention, par « jus végétal », on entend un jus essentiellement exempt de résidus insolubles (appelés également fibres ou Okara dans le cas du soja). Par essentiellement exempt de résidus insolubles, on entend un jus végétal comprenant moins de 20% en poids, de préférence moins de 10% en poids et de manière encore plus préférée moins de 0.5% en poids de résidus insolubles par rapport au poids total du jus végétal.

Selon l'invention, la transglutaminase se trouve désactivée dans l'aliment prêt à être consommé.

Selon l'invention, par « ingrédient d'origine non animale », on entend un ingrédient qui donne du goût à l'aliment et/ou qui apporte des nutriments à l'aliment.

Selon un mode de réalisation particulier, l'ingrédient d'origine non animale est organique.

Ainsi, selon un mode de réalisation, l'ingrédient alimentaire d'origine non animale est choisi parmi l'huile, le sucre, le sel, le poivre, l'amidon, les édulcorants, les arômes, les exhausteurs de goût, les aromates, les agents conservateurs tels que la nisine, l'acide lactique, l'acide malique et les acides organiques en général, les épices tels que le gingembre et le soumbala, les algues telle que la spiruline, les fleurs et les fruits tels que le bissap, la fraise et la tomate et leurs mélanges.

Selon un autre mode réalisation, l'aliment selon l'invention comprend des vitamines telles que les vitamines A, E, D et des minéraux tels que le calcium, le phosphore, le potassium nécessaires à un bon équilibre alimentaire, qui viennent s'ajouter à ceux initialement présents dans le jus végétal (avant et après traitement avec la transglutaminase) à partir duquel est obtenu l'aliment de l'invention.

Selon un mode de réalisation, l'aliment de l'invention comprend au moins un agent texturant tel que la gomme de caroube, la gomme xanthane, la gomme guar, la carboxyméthycellulose, les amidons natifs ou modifiés et leurs mélanges.

Il a été démontré par les inventeurs que l'ajout d'une protéase avec la transglutaminase permet de diminuer, voire de supprimer l'utilisation d'agents texturants.

L'ajout d'une protéase permet également d'améliorer le gout de l'aliment, sa stabilité physique et sa texture.

Ainsi, selon un mode de réalisation particulier de l'invention, l'aliment comprend en outre une protéase.

Selon un mode de réalisation particulier, la protéase est choisie parmi les endoprotéases, les exoprotéases et leurs mélanges.

Selon un mode de réalisation particulier, l'aliment de l'invention ne comprend pas d'agents texturants lorsque qu'une protéase est ajoutée avec la transglutaminase.

Selon un mode de réalisation particulier, la protéase est la subtilisine alcaline (commercialisée sous le nom d'alcalase ®).

Selon un mode de réalisation, l'aliment de l'invention comprend en outre un ingrédient d'origine non animale quelle que soit la source naturelle de protéines végétales.

Les inventeurs ont mis en évidence à travers des données expérimentales que la quantité nécessaire d'extrait sec du jus concentré végétal à utiliser pour un aliment selon l'invention était nettement inférieure à celle requise pour un aliment n'ayant pas été traité avec de la transglutaminase afin d'obtenir un produit fini présentant une texture similaire.

### Préparation alimentaire

L'invention décrit encore une préparation alimentaire dont le taux de déshydratation est contrôlé, pouvant être une composition pulvérulente obtenue par déshydratation contrôlée de l'aliment de l'invention comprenant des protéines d'origine végétale et au moins un ingrédient d'origine non animale.

Selon un mode de réalisation, l'ingrédient alimentaire d'origine non animale, de préférence organique, est choisi parmi l'huile, le sucre, le sel, le poivre, l'amidon, les édulcorants, les arômes, les exhausteurs de goût, les aromates, les agents conservateurs tels que la nisine, l'acide lactique, l'acide malique et les acides organiques en général, les épices tels que le gingembre et le soumbala, les algues telle que la spiruline, les fleurs et les fruits tels que le bissap, la fraise et la tomate et leurs mélanges.

Cette préparation alimentaire présente l'avantage de pouvoir être plus facilement transportée et conservée, notamment lorsqu'elle est sous la forme pulvérulente. Elle peut ensuite par réhydratation permettre la reconstitution d'un aliment prêt à consommer ou prêt à cuisiner ou être utilisé comme aide culinaire.

La composition pulvérulente se présente sous forme de poudre ou de granules pouvant présenter des granulométries différentes et peut être obtenue par différentes méthodes telles que la lyophilisation, le spray drying, le séchage sur rouleaux ou l'extrusion associés à un éventuel broyage. Les modes de séchages cités peuvent être associés ou non à des opérations unitaires de granulation par compression simple ou en conditions humides.

### Procédé de fabrication

Le procédé de fabrication de l'aliment comprenant des protéines essentiellement d'origine végétale, comprend les étapes consistant à :
(i) sélectionner une source naturelle de protéines végétales comprenant des nutriments ;
(ii) extraire un jus végétal à partir de la source naturelle de protéines végétales, ledit jus végétal comprenant la quasi-totalité ou la totalité des nutriments contenus dans la source naturelle de protéines végétales;
(iii)concentrer ledit jus végétal ;
(iv) chauffer le mélange obtenu à l'étape (iii) à une température T1 comprise entre 20 et 70°C pendant une durée t1 comprise entre 5 et 60 minutes ;
(v) ajouter de la transglutaminase audit jus concentré végétal ;
(vi) éventuellement ajouter au mélange de l'étape (v) un acidifiant afin que ledit mélange présente un pH compris entre 3,6 et 5,2 ;
(vii) chauffer le mélange obtenu à l'étape (vi) à une température T2 comprise entre 80 et 140°C pendant une durée t2 comprise entre 2 et 60 minutes.

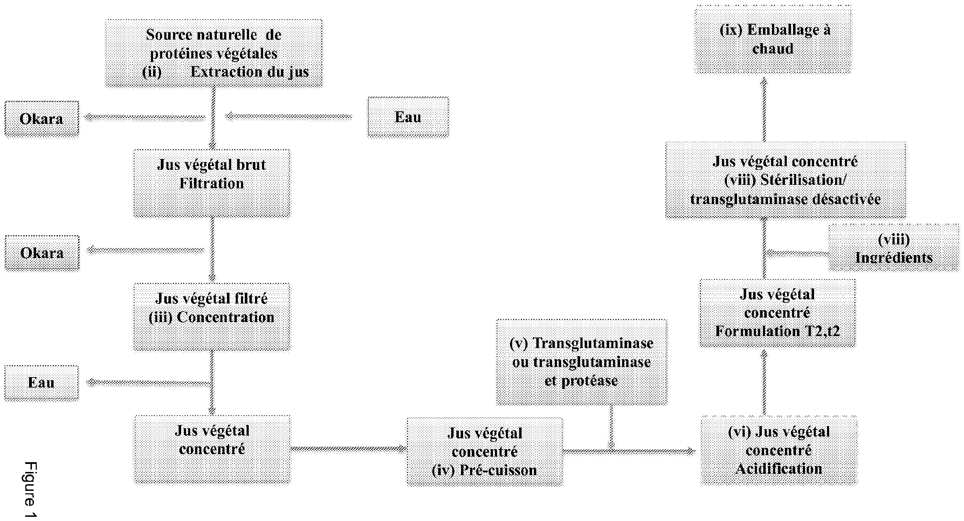

La figure 1 est un diagramme regroupant les différentes étapes du procédé, les étapes optionnelles étant représentées dans des cadres en pointillés.

Selon un mode réalisation, les étapes (iv) et (v) peuvent être inversées ou réalisées simultanément.

Selon un autre mode de réalisation, les étapes (iv), (v) et (vi) sont réalisées simultanément ou dans un ordre aléatoire.

Selon un mode de réalisation particulier, lorsque les étapes (iv), (v) et (vi) sont réalisées simultanément et que des ferments lactiques sont ajoutés dans l'étape (v), alors le traitement thermique de l'étape (iv) est réalisé à des températures comprises entre 30 et 45°C, préférentiellement entre 35 et 40°C.

Selon un mode de réalisation, le mélange obtenu à l'étape (iii) est chauffé de préférence à une température T1 comprise entre 50 et 60°C pendant une durée t1 comprise entre 10 et 30 minutes afin d'optimiser les conditions d'activation de la transglutaminase.

Selon un mode de réalisation, le mélange obtenu à l'étape (vii) est homogénéisé à une pression comprise entre 50 et 700 bars.

Selon un mode réalisation, le procédé de l'invention comprend au moins une étape supplémentaire (viii) consistant à ajouter au mélange obtenu à l'étape (vi) et/ou à l'étape (vii) au moins un ingrédient alimentaire d'origine non animale, de préférence organique.

Selon un mode de réalisation particulier, l'ingrédient alimentaire est choisi parmi l'huile, le sucre, le sel, le poivre, l'amidon, les édulcorants, les arômes, les exhausteurs de goût, les aromates, les agents conservateurs tels que la nisine, l'acide lactique, l'acide malique et les acides organiques en général, les agents texturants, les épices tels que le gingembre et le soumbala, les algues telle que la spiruline, les fleurs et les fruits tels que le bissap, la fraise et la tomate, les vitamines, les minéraux et leurs mélanges.

Selon un mode de réalisation particulier, l'aliment obtenu à la fin du procédé de l'invention présente un pH proche de la neutralité.

Par exemple, l'ajout de sels de fonte permet de faire évoluer le pH vers la neutralité.

Selon un mode de réalisation pouvant être combiné au précédent, le procédé de l'invention comprend une étape supplémentaire (ix) consistant à emballer à chaud le mélange obtenu à l'étape (vi), (vii) ou (viii).

Ainsi, selon ce mode de réalisation, la qualité sanitaire du produit fini est conservée au sein de son emballage.

### Source naturelle de protéines végétales

Selon le procédé de l'invention, par « source naturelle de protéines végétales », on entend au moins une source naturelle de protéines choisie parmi les oléagineux, les oléano-protéagineux, les protéagineux, les céréales, les légumineuses, les graines et/ou feuilles de produits forestiers ligneux et non ligneux et leurs mélanges.

Selon un mode de réalisation particulier, la source naturelle de protéines est choisie parmi les feuilles, les fruits et les écorces des arbres de la famille des Fabaceaes, des Bombacaceaes ou des Gnetaceae.

Selon un autre mode de réalisation particulier, la source naturelle de protéines est choisie parmi les plantes à graines oléagineuses et les légumineuses Fabacées.

Selon un mode de réalisation, la source naturelle de protéines végétales est choisie parmi l'arachide, le soja, le niebé, le haricot, le pois, le pois chiche, la lentille, le sésame, le quinoa, le fenugrec, le sorgho, le Mil, le millet, le riz, le fonio, le maïs, le néré, le moringa et leurs mélanges.

Selon un mode de réalisation particulier, la source naturelle de protéines végétales consiste notamment en une association d'arachide et de soja; d'arachide et de néré, de soja et de néré ou d'arachide et de moringa.

### Extraction

Selon l'invention, le jus végétal est essentiellement exempt de résidus insolubles (ou fibres). Par essentiellement exempt de résidus insolubles, on entend un jus végétal comprenant moins de 20% en poids, de préférence moins de 10% en poids, et de manière encore plus préférée moins de 0,5% en poids de résidus insoluble par rapport au poids total du jus végétal.

L'extraction du jus végétal peut être réalisée par différentes méthodes.

De manière générale, l'extraction comprend les étapes consistant à :
(i) fournir une source naturelle de protéines végétales ;
(ii) appliquer une contrainte mécanique accompagnée éventuellement d'un traitement thermique sur ladite source naturelle de protéines végétales;
(iii) extraire les résidus insolubles afin de récupérer le jus végétal.

Selon un mode de réalisation, la source naturelle de protéines végétales se trouve sous la forme de graines ou de feuilles.

De manière avantageuse, la source naturelle de protéines végétales est utilisée dans son intégralité, c'est-à-dire sans épluchage, épépinage, dénoyautage, etc....

Ainsi, selon ce mode de réalisation, le procédé de l'invention permet d'obtenir un aliment très riche en nutriments et ne nécessite pas d'étapes supplémentaires telles que celles précitées (épluchage, épépinage...) rendant ainsi le procédé plus simple et moins couteux.

Cependant, dans le cas où la source naturelle de protéines végétales n'est pas le soja, ladite source naturelle de protéines végétales peut avoir subi des traitements tels que l'épluchage, le dénoyautage ou l'épépinage.

Selon un mode de réalisation, l'étape (ii) consiste en une étape de broyage ou de pressage.

Afin de minimiser la quantité de résidus insolubles résiduelle, l'étape (iii) peut être réalisée par tout moyen connu tel que centrifugation horizontale, verticale, microfiltration tangentielle, décantation naturelle, filtration frontale.

Selon un mode de réalisation particulier, l'extraction du jus végétal comprend les étapes consistant à :
(a) fournir des graines et ou des feuilles d'une source naturelle de protéines végétales et de l'eau dans un broyeur;
(b) broyer le mélange de l'étape (a) ;
(c) chauffer le mélange obtenu à l'étape (b) à une température comprise entre 70°C et 80°C;
(d) extraire les résidus insolubles ;
(e) pasteuriser à une température comprise entre 90°C et 115°C;
(f) pré-refroidir le jus végétal ainsi obtenu à une température correspondant à la température de fermentation, typiquement entre 10°C et 40°C.

L'étape (c) du procédé d'extraction précité a pour effet de solubiliser les protéines et détruire les lipoxygènases.

L'étape (e) du procédé d'extraction précité a pour effet de stabiliser les bactéries et détruire les facteurs antitrypsiques.

De manière avantageuse, les graines sont broyées et/ou pressées avec leur enveloppe et les feuilles sont broyées et/ou pressées dans leur intégralité.

Ainsi, le jus végétal obtenu après extraction comprend non seulement les protéines mais également les nutriments suivants : lipides, glucides, sels minéraux, vitamines, eau et leurs mélanges.

### Concentration

Selon le procédé de l'invention, l'étape d'extraction du jus végétal est suivie d'une étape de concentration dudit jus végétal.

Selon un mode de réalisation, le jus végétal est concentré afin de présenter un extrait sec compris entre 15% et 30%, de préférence entre 20% et 25% et plus préférentiellement encore entre 21 % et 23%.

En fonction de la teneur en extrait sec du jus concentré, on pourra ajuster la teneur finale de l'aliment.

### Ajout de transglutaminase

Selon l'invention, la transglutaminase est ajoutée en une quantité suffisante pour permettre de créer des liens entre les acides aminés des protéines végétales.

Ainsi, selon un mode de réalisation, la transglutaminase est ajoutée en une quantité comprise entre 0,1% et 0,3%, de préférence entre 0,12 et 0,25% en poids par rapport au poids total du jus concentré végétal.

Selon un mode de réalisation, au moins une protéase est ajoutée avec la transglutaminase lors de l'étape (v).

Selon un mode de réalisation particulier, la protéase est choisie parmi les endoprotéases, les exoprotéases et leurs mélanges.

Selon un mode de réalisation, la protéase est ajoutée en une quantité comprise entre 0.005% et 0.1%, de préférence entre 0.01 et 0.06% en poids par rapport au poids total du jus concentré végétal.

### Acidification

L'étape d'acidification permet d'inactiver la transglutaminase.

Cette étape peut être réalisée par l'ajout au mélange de l'étape (v) d'un acidifiant choisi dans le groupe consistant en un acide, un ferment lactique, de la GDL (gluconodeltalactone) et leurs mélanges.

Après acidification, le mélange présente de préférence un pH compris entre 3,8 et 5.

Selon un mode de réalisation, l'acide est choisi dans le groupe consistant en l'acide citrique, l'acide ascorbique, l'acide phosphorique, l'acide lactique, l'acide malique et leurs mélanges.

Selon un mode de réalisation, l'acide et/ou les ferments lactiques et/ou la GDL est ajouté en une quantité de 1,2 à 1,8% en poids par rapport au poids total du mélange.

### Etape finale de traitement thermique

L'étape (vii) consistant en un traitement thermique du mélange obtenu à l'étape précédente à une température T2 comprise entre 80 et 140°C pendant une durée t2 comprise entre 2 et 60 minutes permet de désactiver de manière irréversible la transglutaminase et permet également de stériliser l'aliment obtenu.

Selon un mode de réalisation particulier, le mélange obtenu à l'étape (vi) est chauffé à une température comprise entre 90°C et 120°C pendant une durée comprise entre 2 et 60 minutes.

Le procédé de l'invention permet d'obtenir différents types d'aliments riche d'un point de vue nutritionnel présentant des textures et des viscosités différentes tels que par exemple des sauces, des crèmes desserts, des jus, des galettes, des pâtes à gâteaux, des pâtes à tartiner, des aliments substituts de fromage avec ou sans affinage de type à pâte fondue, à pâte molle, à pâte ferme, à pâte dure, des pâtes alimentaires.

Ainsi, l'aliment de l'invention peut être un substitut de fromage et comprend de 5% à 20%, de préférence de 8% à 15% en poids de protéines par rapport au poids total de l'aliment.

L'aliment de l'invention peut être une crème dessert et comprend de 4 à 20%, de préférence de 7% à 15% en poids de protéines par rapport au poids total de l'aliment.

L'aliment de l'invention peut encore être un jus et comprend de 2% à 5%, de préférence de 2,5% à 3,1% en poids de protéines par rapport au poids total de l'aliment.

C'est pourquoi, l'aliment obtenu avec le procédé de la présente invention est parfaitement adapté pour une alimentation non seulement riche en protéines mais également riche en nutriments.

### Exemples

Dans les exemples qui suivent, les pourcentages sont exprimés en pourcentage massique.

### Exemple 1 : Fabrication d'un produit de type fromage selon le

### procédé de l'invention

La fabrication d'un produit de type fromage selon le procédé de l'invention comprend les étapes suivantes:
- Fourniture de graines de soja (avec enveloppe),
- Extraction du jus de soja par séparation solide-liquide comprenant les étapes de centrifugation, pressage et filtration en régulant ou non le taux de matière grasse;
- Concentration du jus de soja ; le jus de soja présente un extrait sec entre 21% et 23%,
- Traitement thermique du jus de soja concentré à 50°C pendant 20 minutes,
- Ajout de 0,10% transglutaminase au jus de soja suivi d'un traitement thermique à 50°C pendant 10 minutes,
- Ajout de 1,7% en poids d'acide phosphorique pour inactiver la transglutaminase jusqu'à atteindre un pH de 4,5,
- Chauffage du mélange jusqu'à 70°C,
- Ajout de 15% d'huile de palme raffinée, préalablement chauffée,
- Chauffage du mélange jusqu'à 90°C,
- Ajout des ingrédients suivants : sel, sucre, sels de calcium (propionate de calcium et carbonate de calcium), sels de fonte (mono/diphosphate de potassium), amidons modifiés, gomme de caroube, aromes (cheddar et emmental), et nisine,
- Chauffage du mélange jusqu'à 121,1°C pendant 140 secondes (stérilisation),
- Homogénéisation du mélange à 300 bars,
- Emballage à chaud.

On obtient ainsi un analogue de fromage fondu avec un extrait sec compris entre 41,5-42,5% et un pH compris entre 5,6-5,8 dont la composition finale est donnée dans le tableau suivant.

**Tableau a**

| **Ingrédients g/100g** | **g/100g** |
|---|---|
| Jus de soja concentré | 76,055 |
| Transglutaminase | 0,095 |
| Acide | 1 |
| Huile de palme (matière grasse) | 14 |
| Sel | 0,8 |
| Sucre | 1,2 |
| Sels de calcium | 1,2 |
| Propionate de calcium | 0,3 |
| Sels de fonte (mono/diphosphate de potassium) | 2,8 |
| Amidons modifiés | 1,5 |
| Gomme de caroube (agent texturant) | 0,5 |
| Arome | 0,5 |
| Nisine | 0,05 |
| | 100 |

### Exemple 2 : Influence du traitement avec la transglutaminase sur la quantité d'extrait sec nécessaire

Les compositions de différentes crèmes dessert à base d'arachide sont présentées ci-dessous.

Ces crèmes dessert ont été obtenues par le procédé comprenant les étapes suivantes :
- Fourniture de graines d'arachide (avec enveloppe),
- Extraction d'un jus d'arachide par séparation solide-liquide comprenant les étapes de centrifugation, pressage et filtration mettant en jeu ou non une standardisation du taux de matière grasse,
- Concentration du jus d'arachide, le jus d'arachide présente un extrait sec de 40%,
- Traitement thermique du jus d'arachide concentré à 50°C pendant 20 minutes,
- Ajout des ingrédients suivants selon le type de composition désirée : sucre, cacao, arome caramel, noix de coco, vanille, agents texturants type amidon,
- Chauffage du mélange qu'à 121,1°C pendant 140 secondes (stérilisation),
- Homogénéisation le mélange à une pression de 300 bars,
- Emballage à chaud.

La teneur en glucides, lipides et protéines est comparée avec celle présente dans des crèmes dessert fabriquées à partir de lait, commercialisées sous la marque «la Laitière ».

### Composition 1

**Tableau 1**

| | | | Quantité (g) | Protéines (g) | Lipides (g) | Glucides (g) |
|---|---|---|---|---|---|---|
| jus d'arachide concentré à 40 % | | | 1555 | 239 | 245 | 119 |
| Sucre | | | 300 | | | 300 |
| cacao dégraissé | | | 72 | 17 | 8 | 25 |
| Amidon | | | 40 | | | 40 |
| | | | 1967 | 256 | 253 | 484 |
| | | composition en % | | 13,01 | 12,8 | 24,6 |
| | | Composition en % Kcal | | 19,6 | 43,36 | 37 |
| | | crème la laitière | | 4,3 | 10,3 | 18,1 |
| | | Composition en % Kcal | | 9,4 | 50,85 | 39,7 |

### Composition 2

**Tableau 2**

| | | | Quantité (g) | Protéines (g) | Lipides (g) | Glucides (g) |
|---|---|---|---|---|---|---|
| jus d'arachide concentré à 40 % | | | 1555 | 239 | 245 | 119 |
| Sucre | | | 300 | | | 300 |
| arôme caramel | | | 25 | 0 | 0 | 25 |
| Amidon | | | 40 | | | 40 |
| | | | 1920 | 239 | 245 | 484 |
| | | composition en % | | 12,44 | 12,7 | 25,2 |
| | | Composition en % Kcal | | 18,7 | 43,15 | 38 |
| | | crème la laitière | | 4,3 | 10,3 | 18,1 |
| | | Composition en % Kcal | | 9,4 | 50,85 | 39,7 |

### Composition 3

**Tableau 3**

| | | | Quantité (g) | Protéines (g) | Lipides (g) | Glucides (g) |
|---|---|---|---|---|---|---|
| jus d'arachide concentré à 40 % | | | 1555 | 239 | 245 | 119 |
| Sucre | | | 250 | | | 250 |
| noix de coco | | | 135 | 9 | 90 | 12 |
| Amidon | | | 40 | | | 40 |
| | | | 1980 | 248 | 335 | 421 |
| | | composition en % | | 12,52 | 16,91 | 21,26 |
| | | Composition en % Kcal | | 17,43 | 52,98 | 29,6 |
| | | crème la laitière | | 4,3 | 10,3 | 18,1 |
| | | Composition en % Kcal | | 9,4 | 50,85 | 39,7 |

### Composition 4

**Tableau 4**

| | | | Quantité (g) | Protéines (g) | Lipides (g) | Glucides (g) |
|---|---|---|---|---|---|---|
| jus d'arachide concentré à 40 % | | | 777,5 | 119,4 | 122,53 | 59,7 |
| jus d'arachide écrémé concentré 16 % | | | 777,5 | 31,1 | 6,22 | 10,5 |
| Sucre | | | 250 | | | 300 |
| Cacao | | | 72 | 17 | 8 | 25 |
| Amidon | | | 40 | | | 40 |
| | | | 1917 | 150,05 | 128,75 | 435,2 |
| | | composition en % | | 7,82 | 6,71 | 22,7 |
| | | Composition en % Kcal | | 17 | 33 | 50 |
| | | crème la laitière | | 4,3 | 10,3 | 18,1 |
| | | Composition en % Kcal | | 9,4 | 50,85 | 39,7 |

Les tableaux 1-4 montrent que l'apport énergétique d'une crème dessert à base d'arachide obtenu avec le procédé décrit précédemment est supérieur à celui conféré par des crèmes dessert dites « classiques » à base de lait. Les qualités organoleptiques sont quant à elles similaires à celles des crèmes à base de lait.

Cependant, dans ce procédé le jus d'arachide est concentré à 40%.

Or, il a été démontré (résultats non présentés) qu'en utilisant le procédé de l'invention (c'est-à-dire comportant une étape supplémentaire de traitement du jus d'arachide concentré avec de la transglutaminase), un jus d'arachide concentré à seulement 20% est nécessaire afin d'obtenir des résultats similaires (apports énergétiques et texture identiques) à ceux obtenus avec un procédé classique nécessitant un jus d'arachide concentré à 40%.

### Exemple 3 : Fabrication d'un produit de type substitut de viande selon le procédé de l'invention

La fabrication d'un produit de type substitut de viande selon le procédé de l'invention comprend les étapes suivantes:
- Fourniture de graines de soja (avec enveloppe),
- Extraction du jus de soja par séparation solide-liquide comprenant les étapes de centrifugation, pressage et filtration en régulant ou non le taux de matière grasse;
- Concentration du jus de soja jusqu'à ce qu'il présente un extrait sec entre 20 et 23%,
- Réchauffage du jus de soja concentré à 40°C,
- Ajout d'arômes viandes ou épices ou feuilles broyées,
- Ajout de 0,15% transglutaminase,
- Ajout de ferments lactiques pour acidification et coagulation des protéines,
- Fermentation pendant 4 à 5 h, pH final compris entre 4,7 et 5,
- Egouttage,
- Découpage en cubes, ou hachage au hachoir à viande

On obtient ainsi un produit substituant la viande riche en nutriments qui ne présente pas de perte de texture même en utilisation dans des sauces liquides.

La transglutaminase qui est inactivée par le pH est détruite lors de la stérilisation finale du produit ou lors de la friture ou de la cuisson des aliments.

### Exemple 4 : Influence de l'ajout d'une protéase avec la transglutaminase dans le produit fini

La fabrication d'un produit de type pâte à tartiner a été réalisée selon le procédé de l'invention.
dans une première expérience A, de l'alcalase® (subtilisine alcaline) a été utilisée conjointement avec la transglutaminase.

Dans une seconde expérience B, seule la transglutaminase a été utilisée.

Les conditions opératoires de ces deux expériences (A et B) sont résumées ci-dessous :
- Fourniture de graines de soja (72% en poids) et d'arachide (28% en poids) avec enveloppe,
- Extraction du jus de soja et d'arachide par séparation solide-liquide comprenant les étapes de centrifugation, pressage et filtration en régulant ou non le taux de matières grasses;
- Concentration du jus de soja et d'arachide ; le jus de soja et d'arachide présente un extrait sec entre 27% et 28%,
- Traitement thermique du jus de soja et d'arachide concentré à 50°C pendant 20 minutes,
- Ajout des enzymes :
   - Ajout de 0,15% de transglutaminase et de 0.03% d'alcalase au jus de soja et d'arachide suivi d'un traitement thermique à 50°C pendant 20 minutes pour l'expérience A,
   - Ajout de 0,15% de transglutaminase au jus de soja et d'arachide suivi d'un traitement thermique à 50°C pendant 20 minutes pour l'expérience B,
- Ajout d'environ 10% d'huile de palme raffinée, préalablement chauffée,
- Ajout des ingrédients d'origine non animale (voir tableau 5 ci- dessous),
- Chauffage du mélange jusqu'à 90°C,
- Chauffage du mélange jusqu'à 118°C pendant 4 minutes (stérilisation),
- Refroidissement du mélange à 90°C,
- Ajout d'un arôme fromage.

On obtient ainsi une pâte à tartiner avec un extrait sec compris entre 37,5 et 38% dont les compositions finales sont données dans le tableau 5 suivant.

**Tableau 5**

| | expérience A | | expérience B | |
|---|---|---|---|---|
| **Matières Premières** | **Quantité (%)** | **Pesée** | **Quantité (%)** | **Pesée** |
| | | **(kg /015,00 kg)** | | **(kg /015,00 kg)** |
| Jus de graines | 85,73% | 12,859 | 83,79% | 12,569 |
| Huile de palme | 9,84% | 1,476 | 10,11% | 1,516 |
| Alcalase ® | 0,03% | 0,0045 | 0,00% | 0,0000 |
| Transglutaminase | 0,15% | 0,023 | 0,15% | 0,023 |
| Amidon modifié | 0,000% | 0,000 | 1,200% | 0,180 |
| Sucre | 0,8% | 0,120 | 0,8% | 0,120 |
| Carbonate de calcium | 1,2% | 0,180 | 1,2% | 0,180 |
| Sel | 1,0% | 0,150 | 1,0% | 0,150 |
| Gomme de caroube | 0,0% | 0,000 | 0,5% | 0,075 |
| Aromes | 1,2% | 0,180 | 1,2% | 0,180 |
| Nisine | 0,05% | 0,008 | 0,05% | 0,008 |
| TOTAL | 100,00% | **15,000** | 100,00% | **15,000** |

Comme montré par les résultats du tableau 5, la présence d'alcalase permet de s'affranchir de l'utilisation d'agents texturant tels que l'amidon ou la gomme de caroube qui sont nécessaires lorsque la transglutaminase seule est utilisée afin d'obtenir un produit fini ayant un extrait sec (37,5% pour expérience A et 38% pour l'expérience B) et une texture similaires.

## Revendications

1. Procédé de fabrication d'un aliment comprenant des protéines essentiellement d'origine végétale, le dit procédé comprenant les étapes consistant à :
(i) sélectionner une source naturelle de protéines végétales comprenant des nutriments ;
(ii) extraire un jus végétal à partir de la source naturelle de protéines végétales, ledit jus végétal comprenant la quasi-totalité ou la totalité des nutriments contenus dans la source naturelle de protéines végétales;
(iii) concentrer ledit jus végétal ;
(iv) chauffer le mélange obtenu à l'étape (iii) à une température T1 comprise entre 20 et 70°C pendant une durée t1 comprise entre 5 et 60 minutes ;
(v) ajouter de la transglutaminase audit jus concentré végétal ;
(vi) éventuellement ajouter au mélange de l'étape (v) un acidifiant afin que ledit mélange présente un pH compris entre 3,6 et 5,2 ;
(vii) chauffer le mélange obtenu à l'étape (vi) à une température T2 comprise entre 80 et 140°C pendant une durée t2 comprise entre 2 et 60 minutes.

2. Procédé selon la revendication 1, **caractérisé par le fait que** le jus végétal concentré présente un extrait sec compris entre 15% et 30%.

3. Procédé selon l'une des revendications 1 ou 2, **caractérisé en ce qu'**une protéase est ajoutée avec la transglutaminase lors de l'étape (v).

4. Procédé selon l'une des revendications 1 à 3, **caractérisé par le fait que** l'acidifiant est choisi dans le groupe consistant en un acide, un ferment lactique, de la GDL (gluconodeltalactone) et leurs mélanges.

5. Procédé selon l'une des revendications 1 à 4, **caractérisé par le fait qu'**il comprend une étape supplémentaire (viii) consistant à ajouter au mélange obtenu à l'étape (vi) et/ou à l'étape (vii) au moins un ingrédient alimentaire d'origine non animale choisi parmi l'huile, le sucre, le sel, le poivre, l'amidon, les édulcorants, les arômes, les exhausteurs de goût, les aromates, les agents conservateurs tels que la nisine, l'acide lactique, l'acide malique et les acides organiques en général, les agents texturants, les épices tels que le gingembre et le soumbala, les algues telle que la spiruline, les fleurs et les fruits tels que le bissap, la fraise et la tomate, les vitamines, les minéraux et leurs mélanges.

6. Procédé selon l'une des revendications 1 à 5, **caractérisé par le fait que** la transglutaminase est ajoutée en une quantité comprise entre 0,1 et 0,3% en poids par rapport au poids total du jus concentré végétal.

7. Procédé selon l'une des revendications 1 à 6, **caractérisé par le fait que** la source naturelle de protéines végétales est choisie dans le groupe consistant en les oléagineux, les oléo-protéagineux, les protéagineux, les céréales, les légumineuses, les graines et/ou feuilles de produits forestiers ligneux et non ligneux et leurs mélanges.

8. Procédé selon l'une des revendications 1 à 7, **caractérisé par le fait que** la source naturelle de protéines végétales est choisie dans le groupe consistant en l'arachide, le soja, le niebé, le haricot, le pois, le pois chiche, la lentille, le sésame, le quinoa, le fenugrec, le sorgho, le Mil, le millet, le riz, le fonio, le maïs, le néré, le moringa et leurs mélanges.

9. Aliment comprenant des protéines essentiellement d'origine végétale, ledit aliment étant susceptible d'être obtenu par le procédé selon l'une quelconque des revendications 1 à 8, dans lequel la source naturelle de protéines végétales est choisie dans le groupe consistant en l'arachide, le niebé, le haricot, le pois, le pois chiche, la lentille, le sésame, le quinoa, le fenugrec, le sorgho, le Mil, le millet, le riz, le fonio, le maïs, le néré, le moringa et leurs mélanges.

10. Aliment selon la revendication 9, **caractérisé par le fait que** ledit aliment est choisi dans le groupe consistant en des aliments de type fromage, sauces, crèmes desserts, jus, pâtes à tartiner, galettes, pâtes à gâteaux, pâtes alimentaires.

## Patentansprüche

1. Verfahren zur Herstellung eines Nahrungsmittels, das Proteine umfasst, die im Wesentlichen pflanzlichen Ursprungs sind, wobei das Verfahren die folgenden Schritte umfasst:
(i) Auswählen einer natürlichen Pflanzenproteinquelle, die Nährstoffe enthält;
(ii) Extrahieren eines Pflanzensaftes aus der natürlichen Pflanzenproteinquelle, wobei der Pflanzensaft im Wesentlichen alle oder alle Nährstoffe umfasst, die in der natürlichen Pflanzenproteinquelle enthalten sind;
(iii) Aufkonzentrieren des Pflanzensaftes;
(iv) Erwärmen der in Schritt (iii) erhaltenen Mischung auf eine Temperatur T1 von zwischen 20 und 70°C für eine Zeitdauer t1 von zwischen 5 und 60 Minuten;
(v) Zugeben von Transglutaminase zu dem konzentrierten Pflanzensaft;
(vi) gegebenenfalls Zugeben eines Säuerungsmittels zu der Mischung von Schritt (v), so dass die Mischung einen pH-Wert zwischen 3,6 und 5,2 aufweist;
(vii) Erwärmen der in Schritt (vi) erhaltenen Mischung auf eine Temperatur T2 von zwischen 80 und 140°C für eine Dauer t2 von zwischen 2 und 60 Minuten.

2. Verfahren gemäß Anspruch 1, **dadurch gekennzeichnet, dass** der konzentrierte Pflanzensaft einen Trockenextrakt von zwischen 15% und 30% aufweist.

3. Verfahren gemäß Anspruch 1 oder 2, **dadurch gekennzeichnet, dass** in Schritt (v) eine Protease zusammen mit der Transglutaminase zugegeben wird.

4. Verfahren gemäß einem der Ansprüche 1 bis 3, **dadurch gekennzeichnet, dass** das Säuerungsmittel ausgewählt ist aus der Gruppe, bestehend aus einer Säure, einem Milchsäureferment, GDL (Gluconodeltalacton) und Mischungen davon.

5. Verfahren gemäß einem der Ansprüche 1 bis 4, **dadurch gekennzeichnet, dass** es einen zusätzlichen Schritt (viii), umfasst, bei dem zu der in Schritt (vi) und/oder in Schritt (vii) erhaltenen Mischung mindestens ein Lebensmittelbestandteil nichttierischen Ursprungs zugegeben wird, ausgewählt aus Öl, Zucker, Salz, Pfeffer, Stärke, Süßstoffen, Aromastoffen, Geschmacksverstärkern, Geschmacksstoffen, Konservierungsmitteln wie Nisin, Milchsäure, Apfelsäure und organische Säuren im Allgemeinen, Texturierungsmitteln, Gewürzen wie Ingwer und Soumbala, Algen wie Spirulina, Blumen und Früchten wie Bissap, Erdbeeren und Tomaten, Vitaminen, Mineralien und Mischungen davon.

6. Verfahren gemäß einem der Ansprüche 1 bis 5, **dadurch gekennzeichnet, dass** die Transglutaminase in einer Menge von zwischen 0,1 und 0,3 Gew.-%, bezogen auf das Gesamtgewicht des Pflanzensaftkonzentrats, zugegeben wird.

7. Verfahren gemäß einem der Ansprüche 1 bis 6, **dadurch gekennzeichnet, dass** die natürliche Pflanzenproteinquelle ausgewählt ist aus der Gruppe, bestehend aus Ölpflanzen, Öl- und Eiweißpflanzen, Eiweißpflanzen, Getreide, Hülsenfrüchten, Samen und/oder Blättern von holzartigen und nichtholzartigen Forsterzeugnissen und Mischungen davon.

8. Verfahren gemäß einem der Ansprüche 1 bis 7, **dadurch gekennzeichnet, dass** die natürliche Pflanzenproteinquelle ausgewählt ist aus der Gruppe, bestehend aus Erdnüssen, Sojabohnen, Kuhbohnen, Bohnen, Erbsen, Kichererbsen, Linsen, Sesam, Quinoa, Bockshornklee, Sorghum, Hirse, Rispenhirse, Reis, Fonio, Mais, Néré, Moringa und Mischungen davon.

9. Lebensmittel, das Proteine umfasst, die im Wesentlichen pflanzlichen Ursprungs sind, wobei das Lebensmittel durch das Verfahren gemäß einem der Ansprüche 1 bis 8 erhalten werden kann, wobei die natürliche Pflanzenproteinquelle ausgewählt ist aus der Gruppe, bestehend aus Erdnüssen, Kuhbohnen, Bohnen, Erbsen, Kichererbsen, Linsen, Sesam, Quinoa, Bockshornklee, Sorghum, Hirse, Rispenhirse, Reis, Fonio, Mais, Néré, Moringa und Mischungen davon.

10. Lebensmittel gemäß Anspruch 9, **dadurch gekennzeichnet, dass** das Lebensmittel ausgewählt ist aus der Gruppe, bestehend aus käseartigen Lebensmitteln, Soßen, Sahnedesserts, Säften, Aufstrichen, Gebäck, Kuchenteig, Teigwaren.

## Claims

1. A method of producing a food comprising proteins mainly of plant origin, said method comprising the steps consisting of:
(i) selecting a natural source of plant proteins including nutrients;
(ii) extracting vegetable juice from the natural source of plant proteins, said vegetable juice comprising almost all or all of the nutrients contained in the natural source of plant proteins;
(iii) concentrating said vegetable juice;
(iv) heating the mixture obtained in step (iii) to a temperature T1 of between 20 and 70°C for a duration t1 of between 5 and 60 minutes;
(v) adding the transglutaminase to said concentrated vegetable juice;
(vi) possibly adding an acidifying agent to the mixture from step (v) so that said mixture presents a pH of between 3.6 and 5.2;
(vii) heating the mixture obtained in step (vi) to a temperature T2 of between 80 and 140°C for a duration t2 of between 2 and 60 minutes.

2. The method according to claim 1, **characterized by** the fact that the concentrated vegetable juice presents a dry extract of between 15% and 30%.

3. The method according to one of claims 1 or 2, **characterized in that** a protease is added with the transglutaminase during step (v).

4. The method according to one of claims 1 to 3, **characterized by** the fact that the acidifier is chosen from the group consisting of an acid, a lactic ferment, GDL (glucono delta-lactone) and mixtures thereof.

5. The method according to any one of claims 1 to 4, **characterized by** the fact that the method comprises an additional step (viii) consisting of adding to the mixture obtained in step (vi) and/or in step (vii) at least one food ingredient of non-animal origin chosen from oil, sugar, salt, pepper, starch, sweeteners, flavors, flavor enhancers, aromatics, preservatives such as nisin, lactic acid, malic acid and organic acids in general, texturizing agents, spices such as ginger and sumbala, algae such as spirulina, flowers and fruits such as hibiscus, strawberry and tomato, vitamins, minerals and mixtures thereof.

6. The method according to one of claims 1 to 5, **characterized by** the fact that transglutaminase is added in a quantity of between 0.1 and 0.3% by weight in relation to the total weight of the concentrated vegetable juice.

7. The method according to one of claims 1 to 6, **characterized by** the fact that the natural source of plant proteins is chosen from among oil-rich, oil-protein-rich or protein-rich sources, cereal grains, leguminous plants, seeds and/or leaves from timber and non-timber forest products and mixtures thereof.

8. The method according to one of claims 1 to 7, **characterized by** the fact that the natural source of plant proteins is chosen from among peanut, soya, cowpea, bean, pea, chickpea, lentil, sesame, quinoa, fenugreek, sorghum, timothy grass, millet, rice, fonio, maize, locust bean, moringa and mixtures thereof.

9. A food comprising proteins mainly of plant origin, said food being obtainable by the method according to one of claims 1 to 8, wherein the natural source of plant proteins is chosen from among peanut, cowpea, bean, pea, chickpea, lentil, sesame, quinoa, fenugreek, sorghum, timothy grass, millet, rice, fonio, maize, locust bean, moringa and mixtures thereof.

10. The food according to claim to 9, **characterized by** the fact that said food is chosen from the group consisting of foods of the cheese, sauce, cream dessert, juice, spread, patty, cake mix and pasta type.
